# EUROPEAN PATENT SPECIFICATION

(11) **EP 1 969 665 B1**
(45) Date of publication and mention of the grant of the patent: **18.01.2012**
(21) Application number: 06842826.7
(22) Date of filing: 08.12.2006
(51) Int. Cl.: H01M 8/24

(54) **FUEL CELL INCLUDING A HYDROGEN PERMEABLE MEMBRANE AS ANODE**
BRENNSTOFFZELLE MIT EINER WASSERSTOFFPERMEABLEN MEMBRAN ALS ANODE
PILE À COMBUSTIBLE ET PROCÉDÉ DE FABRICATION DE LADITE PILE

(30) Priority: 19.12.2005 JP 2005364353
(43) Date of publication of application: 17.09.2008
(73) Proprietor: Toyota Jidosha Kabushiki Kaisha, Toyota-shi, Aichi 471-8571 (JP)
(72) Inventor: IZAWA, Yasuhiro, Aichi 471-8571 (JP)
(74) Representative: Kuhnen & Wacker
(86) International application number: PCT/JP2006/324995
(87) International publication number: WO 2007/072740

(56) References cited:
- EP-A- 0 361 383
- WO-A-00/45457
- WO-A-2004/084333
- JP-A- 2005 261 758
- US-A1- 5 244 752
- US-A1- 2003 228 508

## Description

### Technical Field

This invention generally relates to a manufacturing method for a fuel cell.

### Background Art

One or more aspects of this invention generally relate to a fuel cell and a manufacturing method of the fuel cell.

In general, a fuel cell is a device that obtains electrical power from fuel, hydrogen and oxygen. Fuel cells are being widely developed as an energy supply system because fuel cells are environmentally superior and can achieve high energy efficiency.

There are some types of fuel cells including a solid electrolyte such as a polymer electrolyte fuel cell, a solid-oxide fuel cell, and a hydrogen permeable membrane fuel cell (HMFC). Here, the hydrogen permeable membrane fuel cell has a dense hydrogen permeable membrane. The dense hydrogen permeable membrane is composed of a metal having hydrogen permeability, and acts as an anode. The hydrogen permeable membrane fuel cell has a structure in which a solid electrolyte having proton conductivity is deposited on the hydrogen permeable membrane. Japanese Patent Application Publication No. 2005-19041 (hereinafter referred to as Document 1), for example, proposes a method of coating the electrolyte on a substrate of dense metal having hydrogen permeability, as a manufacturing method of the hydrogen permeable membrane fuel cell.

However, the hydrogen permeable substrate acting as an anode is used as a layer supporting the electrolyte in Document 1. And it is not possible to enlarge an area of the electrolyte to more than an area of the anode, being different from the polymer electrolyte fuel cell. It is therefore possible that some of hydrogen permeating the hydrogen permeable substrate leaks to a cathode side.

Various aspects of this invention have been made in view of the above-mentioned circumstances. One or more aspects of the invention provide a fuel cell and a manufacturing method of the fuel cell in which the leakage of the hydrogen to the cathode side is restrained, the hydrogen permeating the hydrogen permeable substrate.

Document WO 00/45457 A discloses micro-electro-mechanical systems (MEMS) based thin-film fuel cells for electrical power applications. The MEMS-based fuel cell may be of a solid oxide type (SOFC), a solid polymer type (SPFC); or a proton exchange membrane type (PEMFC), and each fuel cell basically consists of an anode and a cathode separated by an electrolyte layer. The electrolyte layer can consist of either a solid oxide or solid polymer material, or proton exchange membrane electrolyte materials may be used. Additionally catalyst layers can also separate the electrodes (cathode and anode) from the electrolyte. Gas manifolds are utilized to transport the fuel and oxidant to each cell and provide a path for exhaust gases. The electrical current generated from each cell is drawn away with an interconnect and support structure integrated with the gas manifold. The fuel cells utilize integrated resistive heaters for efficient heating of the material. By combining MEMS technology with thin-film deposition technology, thin-film fuel cells having microflow-channels and full-integrated circuitry can be produced that will lower the operating temperature and will yield an order of magnitude greater power density than the currently known fuel cells.

Document WO 2004/084333 A, finally, discloses a fuel cell and a method for producing an electrolyte membrane for a fuel cell. An electrolyte layer is provided in the form of a thin film in a solid oxide fuel cell. A solid oxide fuel cell comprises an electrolyte layer formed as a film on the surface of a hydrogen separation metal layer. The solid oxide fuel cell also comprises a mechanism for preventing separation between the hydrogen separation metal layer and the electrolyte layer which is ascribable to expansion of the hydrogen separation metal layer during when hydrogen permeates therethrough. As such a separation preventing mechanism, there can be applied a structure for suppressing expansion of the hydrogen separation metal layer or a structure wherein the electrolyte layer is divided for relieving stress caused by expansion. By having such a constitution, the electrolyte layer can have the form of a sufficiently thin film.

### Disclosure of the Invention

A manufacturing method of a fuel cell includes eliminating a circumference edge of an upper face of a hydrogen permeable membrane so that a sidewall of the hydrogen permeable membrane is to be a slope facing toward an upper face side of the hydrogen permeable membrane, forming an electrolyte layer on the upper face of the hydrogen permeable membrane after eliminating the circumference edge, and forming a cathode on the electrolyte layer. The electrolyte layer has proton conductivity. In the exemplary embodiment, the circumference edge of the upper face of the hydrogen permeable membrane is eliminated. The electrolyte layer having proton conductivity is formed on the hydrogen permeable membrane. And the cathode is formed on the electrolyte layer.

In this case, the electrolyte layer is formed after chamfering the circumference edge of the hydrogen permeable membrane on the side of the upper face. And the electrolyte layer covers the upper face and the sidewall of the hydrogen permeable membrane if the electrolyte layer is formed on the upper face of the hydrogen permeable membrane, even if the thickness of the electrolyte layer is lower than that of the hydrogen permeable membrane. And it is restrained that the hydrogen permeating the hydrogen permeable membrane leaks to the cathode side. And it is possible to reduce the thickness of the electrolyte layer. And it is restrained that the upper face of the hydrogen permeable membrane is exposed, when the electrolyte layer is formed on the hydrogen permeable membrane from one direction. In this case, it is not necessary to form the electrolyte layer from a plurality of directions. It is therefore possible to shorten the manufacturing process and to reduce the production cost.

In the exemplary embodiment, the circumference edge of the upper face of the hydrogen permeable membrane may be etched in the step of eliminating the circumference edge.

In the exemplary embodiment, a hydrogen non-permeable layer may be the electrolyte layer that covers the sidewall of the hydrogen permeable membrane. In this case, it is possible to prevent an electrical short caused by a contact between the hydrogen non-permeable layer and another member.

In the exemplary embodiment, the electrolyte layer may be a plated layer.

### Effect of the Invention

In accordance with the invention, it is restrained that hydrogen permeating a hydrogen permeable membrane leaks to a cathode side. It is therefore possible to restrain reduction of power generating efficiency of a fuel cell in accordance with the present invention.

### Brief Description of the Drawings.

Exemplary embodiments of one or more aspects of the invention will be described with reference to the following drawings, wherein:
Fig. 1 illustrates a schematic sectional view of a fuel cell in accordance with a first embodiment of the present invention;
FIG. 2A through FIG. 2E illustrate a manufacturing flow of the fuel cell in accordance with the first embodiment;
FIG. 3 illustrates a cross sectional view of a fuel cell in accordance with a second embodiment of the present invention;
FIG. 4A through FIG. 4C illustrate a manufacturing flow of the fuel cell in accordance with the second embodiment;
FIG. 5 illustrates a cross sectional view of a fuel cell ; and
FIG. 6A through FIG. 6D illustrate a manufacturing flow of the fuel cell in accordance with the third embodiment.

### Best Mode for Carrying out the Invention

### (First embodiment)

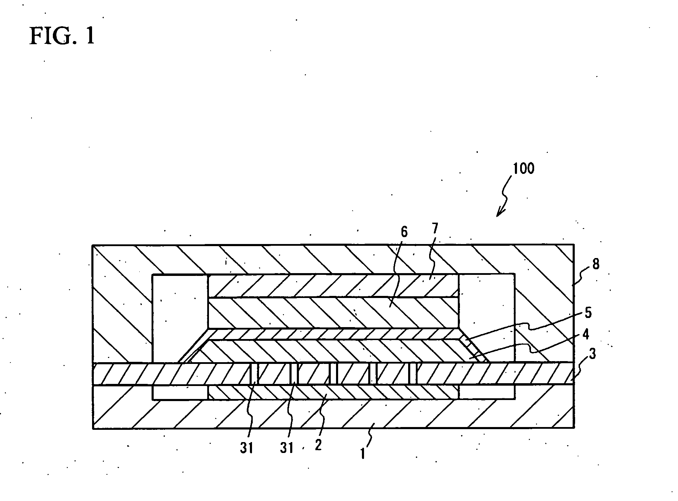

FIG. 1 illustrates a schematic cross sectional view of a fuel cell 100 in accordance with a first embodiment of the present invention. In the first embodiment, a hydrogen permeable membrane fuel cell is used as a fuel cell. A description will be given of a structure of the fuel cell 100. As shown in FIG. 1, the fuel cell 100 has a separator 1, a separator 8, a power collector 2, a power collector 7, a support frame 3, a hydrogen permeable membrane 4, an electrolyte layer 5 and a cathode 6.

The separator 1 is made of a conductive material such as a stainless steel. The separator 1 has a convex portion adjacent to a circumference on an upper face thereof. The power collector 2 is made of a conductive material such as a porous SUS430, a porous Ni, a porous Pt-plated Al₂O₃, or a Pt mesh. The power collector 2 is laminated on a center area of the separator 1. The support frame 3 is made of a conductive material such as a stainless steel. The support frame 3 supports and strengthens the hydrogen permeable membrane 4 and the electrolyte layer 5. The support frame 3 is provided on the separator 1 through the convex portion of the separator 1 and the power collector 2. The support frame 3 is bonded to the separator 1. A plurality of a through hole 31 is formed in the support frame 3. The hydrogen permeable membrane 4 is laminated on the support frame 3.

The hydrogen permeable membrane 4 is made of a metal having hydrogen permeability. The hydrogen permeable membrane 4 acts as an anode where a fuel gas is provided, and acts as a support member supporting and strengthening the electrolyte layer 5. The hydrogen permeable membrane 4 is made of a metal such as palladium, vanadium, titanium or tantalum. The thickness of the hydrogen permeable membrane 4 is, for example, approximately 50 µm to 100 µm. A circumference edge on the side of the upper face of the hydrogen permeable membrane 4 is eliminated by chamfering or the like. In this case, it is preferable that the sidewall of the hydrogen permeable membrane 4 is sloping from the circumference edge of the upper face to the circumference edge of the lower face of the hydrogen permeable membrane 4.

The electrolyte layer 5 is provided on the upper face and the sidewall of the hydrogen permeable membrane 4. The electrolyte layer 5 is made of a proton conductivity material such as a perovskite proton-conductivity-material (BaCeO₃ or the like) or a solid acid proton-conductivity-material (CsHSO₄ or the like). The electrolyte layer 5 has proton conductivity and hydrogen non-permeability. The cathode 6 is provided on an area of the electrolyte layer 5 above the upper face of the hydrogen permeable membrane 4. The cathode 6 is made of a conductive material such as lanthanum cobaltite, lanthanum manganate, silver, platinum, or platinum-supported carbon.

The power collector 7 is made of the same material as the power collector 2, and is laminated on the cathode 6. The separator 8 is made of a conductive material such as a stainless steel. The separator 8 has a convex portion adjacent to a circumference on a lower face thereof. The separator 8 is laminated on the power collector 7. The separator 8 is bonded to the support frame 3 through the convex portion of the separator 8. An insulating layer (not shown in FIG. 1) is provided at a boundary face between the separator 8 and the support frame 3. It is thus possible to prevent an electrical short between the anode and the cathode.

Next, a description will be given of an operation of the fuel cell 100. A fuel gas including hydrogen is provided to a gas passageway of the separator 1. This fuel gas is provided to the hydrogen permeable membrane 4 via the power collector 2 and the through hole 31 of the support frame 3. Some hydrogen in the fuel gas is converted into protons at the hydrogen permeable membrane 4. The protons are conducted in the electrolyte layer 5 and get to the cathode 6.

On the other hand, an oxidant gas including oxygen is provided to a gas passageway of the separator 8. This oxidant gas is provided to the cathode 6 via the power collector 7. The protons react with oxygen in the oxidant gas provided to the cathode 6. Water and electrical power is thus generated. The generated electrical power is collected via the power collectors 2 and 7 and the separators 1 and 8.

In the embodiment, the electrolyte layer 5 having hydrogen non-permeability covers the upper face and the sidewall of the hydrogen permeable membrane 4. And it is restrained that the hydrogen permeating the hydrogen permeable membrane 4 leaks to the cathode 6 side. It is therefore possible to restrain the reduction of the power generation efficiency of the fuel cell 100.

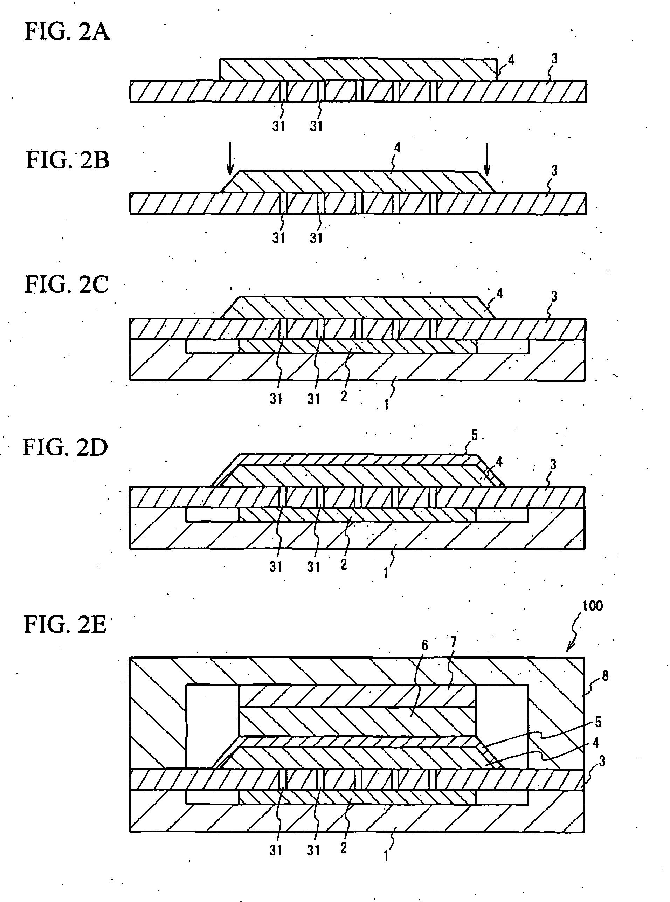

Next, a description will be given of a manufacturing method of the fuel cell 100. FIG. 2A through FIG. 2E illustrate a manufacturing flow of the fuel cell 100. As shown in FIG. 2A, the hydrogen permeable membrane 4 is bonded to the support frame 3. Next, as shown in FIG. 2B, the circumference edge on the side of the upper face of the hydrogen permeable membrane 4 is eliminated by chamfering. With the chamfering process, a flat or curved slope face may be formed on the circumference edge so as to face toward the upper face side of the hydrogen permeable membrane 4. In this case, the circumference edge may be subjected to a chemical treatment such as an etching with a mask or may be grinded by a scribing.

Next, as shown in FIG. 2C, the power collector 2 is provided on the separator 1 and the support frame 3 is bonded to the separator 1. Next, as shown in FIG. 2D, the electrolyte layer 5 is formed on the upper face and on the sidewall of the hydrogen permeable membrane 4 with PLD method, sputtering or the like. Next, as shown in FIG. 2E, the cathode 6 and the power collector 7 are provided on the electrolyte layer 5. After that, the support frame 3 is bonded to the convex portion of the separator 8. The fuel cell 100 is fabricated through the operations mentioned above.

As mentioned above, the electrolyte layer 5 is formed after chamfering the circumference edge on the side of the upper face of the hydrogen permeable membrane 4. The electrolyte layer 5 covers the upper face and the sidewall of the hydrogen permeable membrane 4 if the electrolyte layer 5 is formed on the upper face of the hydrogen permeable membrane 4. In this case, the electrolyte layer 5 covers the sidewall of the hydrogen permeable membrane 4, even if the thickness of the electrolyte layer 5 is lower than that of the hydrogen permeably membrane 4. And it is restrained that the hydrogen permeating the hydrogen permeable membrane 4 leaks to the cathode 6 side. And it is possible to reduce the thickness of the electrolyte layer 5. And it is restrained that the upper face of the hydrogen permeable membrane 4 is exposed, when the electrolyte layer 5 is formed on the hydrogen permeable membrane 4 from one direction. In this case, it is not necessary to form the electrolyte layer 5 from a plurality of directions. It is therefore possible to shorten the manufacturing process and to reduce the production cost.

### (Second embodiment)

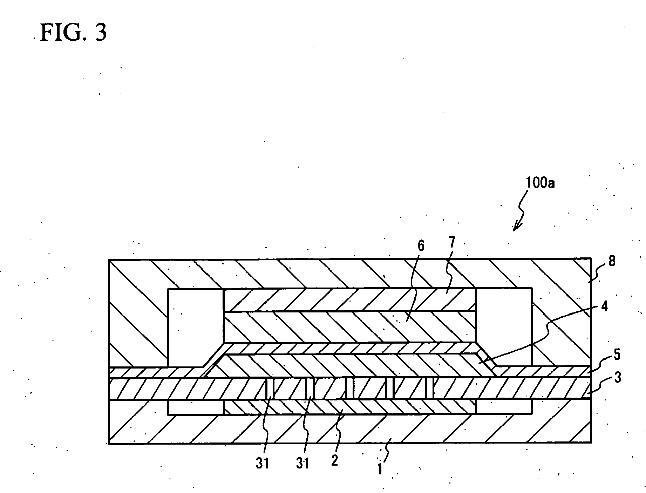

FIG. 3 illustrates a schematic cross sectional view of a fuel cell 100a in accordance with a second embodiment of the present invention. As shown in FIG. 3, in the fuel cell 100a, the electrolyte layer 5 is provided from the upper face of the hydrogen permeable membrane 4 to the boundary face between the support frame 3 and the separator 8. In the fuel cell 100a, it is restrained that the hydrogen permeating the hydrogen permeable membrane 4 leaks to the cathode 6 side. And the electrolyte layer 5 insulates the separator 8 from the support frame 3. It is therefore possible to prevent the electrical short between the cathode and the anode. And the upper face of the support frame 3 is not exposed. The electrical short between the power collector 7 and the support frame 3 is therefore prevented even if the power collector 7 is shifted from a given position.

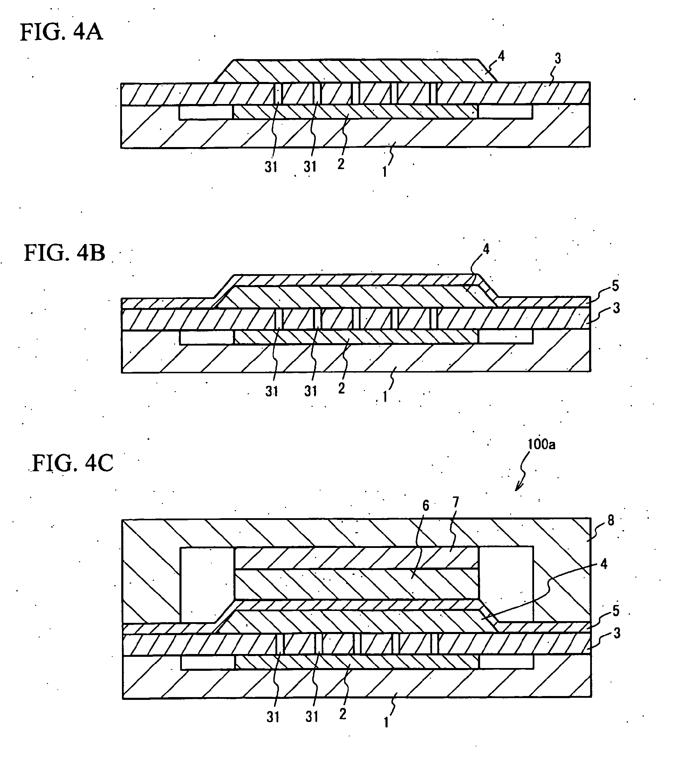

Next, a description will be given of a manufacturing method of the fuel cell 100a. FIG. 4A through FIG. 4C illustrate a manufacturing flow of the fuel cell 100a. As shown in FIG. 4A, the manufacturing method of the fuel cell 100a is the same as that of the fuel cell 100 from the step of FIG. 2A to the step of FIG. 2C. Next, as shown in FIG. 4B, the electrolyte layer 5 is formed on the hydrogen permeable membrane 4 and on the exposed face of the support frame 3 with PLD method, sputtering or the like. Next, as shown in FIG. 4C, the cathode 6 and the power collector 7 are provided on an area of the electrolyte layer 5 above the hydrogen permeable membrane 4. After that, an area of the upper face adjacent to the circumference of the electrolyte layer 5 is bonded to the convex portion of the separator 8. The fuel cell 100a is fabricated through the operations mentioned above.

As mentioned above, the electrolyte layer 5 is provided from the upper face of the hydrogen permeable membrane 4 to around the circumference of the upper face of the support frame 3. And it is restrained that the hydrogen permeating the hydrogen permeable membrane 4 leaks to the cathode 6 side. And the separator 8 is insulated from the support frame 3 by a process of forming the electrolyte layer 5, without insulating the separator 8 and the support frame 3. It is therefore possible to shorten the manufacturing process and to reduce the production cost.

### (Third embodiment, not according to the invention)

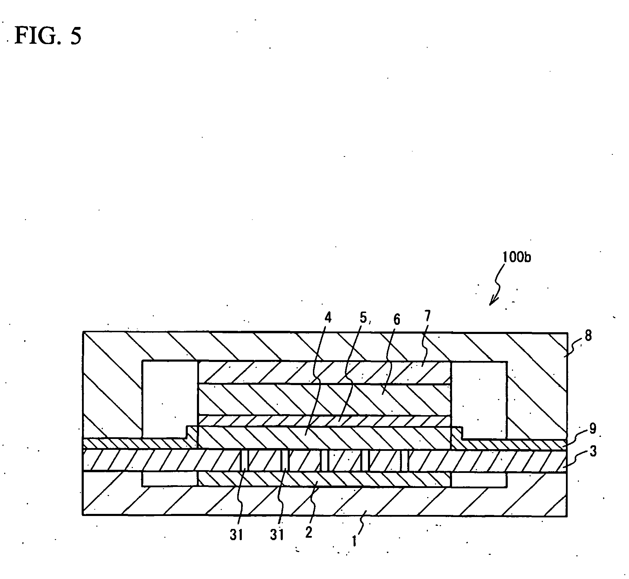

FIG. 5 illustrates a schematic cross sectional view of a fuel cell 100b . As shown in FIG. 5, a plated layer 9 having hydrogen non-permeability is provided from the sidewall of the hydrogen permeable membrane 4 to the circumference of the upper face of the support frame 3. The plated layer 9 is made of a metal such as chrome or zinc. An insulating layer (not shown in FIG. 5) is provided at a boundary face between the separator 8 and the support frame 3. And the separator 8 is insulated from the support frame 3. In the fuel cell 100b, it is restrained that the hydrogen permeating the hydrogen permeable membrane 4 leaks to the cathode 6 side.

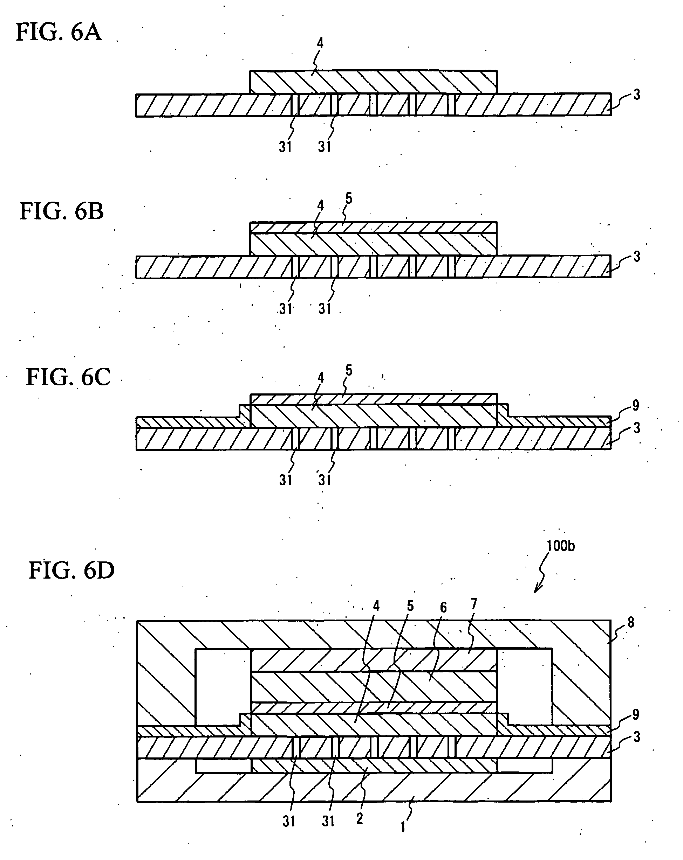

Next, a description will be given of a manufacturing method of the fuel cell 100b. FIG. 6A through FIG. 6D illustrate a manufacturing flow of the fuel cell 100b. As shown in FIG. 6A, the support frame 3 is bonded to the hydrogen permeable membrane 4. Next, as shown in FIG. 6B, the electrolyte layer 5 is formed on the hydrogen permeable membrane 4 with PLD method, sputtering or the like.

Next, as shown in FIG. 6C, the sidewall of the hydrogen permeable membrane 4 and the upper face of the support frame 3 are subjected to an electrolytic plating treatment. And the plated layer 9 is formed from the sidewall of the hydrogen permeable membrane 4 to the circumference of the upper face of the support frame 3. Next, as shown in FIG. 6D, the power collector 2 is provided on the separator 1. The separator 1 is bonded to the support frame 3. The cathode 6 and the powder collector 7 are provided on the electrolyte layer 5. After that, the support frame 3 is bonded to the convex portion of the separator 8. The fuel cell 100b is fabricated through the operations mentioned above.

As mentioned above, the hydrogen permeable membrane 4 made of a metal is subjected to an electrolytic plating treatment. And it is restrained that the hydrogen permeable membrane 4 is exposed, even if the thickness of the electrolyte layer 5 is lower than that of the hydrogen permeable membrane 4. It is therefore restrained that the hydrogen permeating the hydrogen permeable membrane 4 leaks to the cathode 6 side. And it is possible to reduce the thickness of the electrolyte layer 5. The plated layer is not formed on the electrolyte layer 5, because the electrolyte layer 5 is an insulating layer. It is therefore possible to plate the sidewall of the hydrogen permeable membrane 4 without masking the electrolyte layer 5. It is therefore possible to shorten the manufacturing process and to reduce the production cost.

## Claims

1. A manufacturing method of a fuel cell (100) comprising;
eliminating a circumference edge of an upper face of a hydrogen permeable membrane (4) so that a sidewall of the hydrogen permeable membrane (4) is to be a slope facing toward an upper face side of the hydrogen permeable membrane (4);
forming an electrolyte layer (5) on the upper face of the hydrogen permeable membrane (4) after eliminating the circumference edge,
the electrolyte layer (5) having proton conductivity; and
forming a cathode (6) on the electrolyte layer (5).

2. The method as claimed in claim 1, wherein the circumference edge of the upper face of the hydrogen permeable membrane (4) is etched in the step of eliminating the circumference edge.

3. The method as claimed in claim 1, wherein the electrolyte layer (5) is a hydrogen non-permeable layer that covers the sidewall of the hydrogen permeable membrane (4).

4. The method as claimed in claim 3, wherein the electrolyte layer (5) is a plated layer.

## Patentansprüche

1. Herstellungsverfahren für eine Brennstoffzelle (100), aufweisend:
Beseitigen einer Umfangskante einer oberen Fläche einer wasserstoffdurchlässigen Membran (4), so dass eine Seitenwand der wasserstoffdurchlässigen Membran (4) eine Abschrägung aufweist, die zu einer Seite der oberen Fläche der wasserstoffdurchlässigen Membran (4) gerichtet ist;
Ausbilden einer Elektrolytschicht (5) auf der oberen Fläche der wasserstoffdurchlässigen Membran (4) nach Beseitigen der Umfangskante,
wobei die Elektrolytschicht (5) eine Protonenleitfähigkeit aufweist; und
Ausbilden einer Kathode (6) auf der Elektrolytschicht (5).

2. Verfahren nach Anspruch 1, wobei die Umfangskante der oberen Fläche der wasserstoffdurchlässigen Membran (4) in dem Schritt des Beseitigens der Umfangskante geätzt wird.

3. Verfahren nach Anspruch 1, wobei die Elektrolytschicht (5) eine wasserstoffundurchlässige Schicht ist, die die Seitenwand der wasserstoffdurchlässigen Membran (4) bedeckt.

4. Verfahren nach Anspruch 3, wobei die Elektrolytschicht (5) eine plattierte Schicht ist.

## Revendications

1. Procédé de fabrication d'une pile à combustible (100) comprenant les étapes consistant à :
éliminer un bord de circonférence d'une face supérieure d'une membrane perméable à l'hydrogène (4) de sorte qu'une paroi latérale de la membrane perméable à l'hydrogène (4) doit être une pente en regard vers un côté de face supérieure de la membrane perméable à l'hydrogène (4) ;
former une couche d'électrolyte (5) sur la face supérieure de membrane perméable à l'hydrogène (4) après élimination du bord de circonférence,
la couche d'électrolyte (5) présentant une conductivité des protons ; et
former une cathode (6) sur la couche d'électrolyte (5).

2. Procédé selon la revendication 1, dans lequel le bord de circonférence de la face supérieure de la membrane perméable à l'hydrogène (4) est gravé dans l'étape d'élimination du bord de circonférence.

3. Procédé selon la revendication 1, dans lequel la couche d'électrolyte (5) est une couche non perméable à l'hydrogène qui couvre la paroi latérale de la membrane perméable à l'hydrogène (4).

4. Procédé selon la revendication 3, dans lequel la couche d'électrolyte (5) est une couche plaquée.
